Europäisches Patentamt

European Patent Office

Office européen des brevets

(11) Veröffentlichungsnummer: **0 351 550**
**A1**

# EUROPÄISCHE PATENTANMELDUNG

(21) Anmeldenummer: 89110838.3

(51) Int. Cl.⁴: **C01G 19/00**

(22) Anmeldetag: 15.06.89

---

Geänderte Patentansprüche gemäss Regel 86 (2) EPÜ.

(30) Priorität: 23.06.88 DE 3821133

(43) Veröffentlichungstag der Anmeldung:
24.01.90 Patentblatt 90/04

(84) Benannte Vertragsstaaten:
AT BE CH DE ES FR GB GR IT LI NL SE

(71) Anmelder: **Henkel Kommanditgesellschaft auf Aktien**
**Postfach 1100 Henkelstrasse 67**
**D-4000 Düsseldorf 1(DE)**

(72) Erfinder: **Wüst, Willi, Dr.**
**Fasanenring 32**
**D-4030 Ratingen(DE)**
Erfinder: **Wollmann, Josef**
**Klosterstrasse 112**
**D-5120 Herzogenrath 3(DE)**
Erfinder: **Brodalla, Dieter, Dr.**
**Benrather Schlossallee 65**
**D-4000 Düsseldorf(DE)**

---

(54) **Verfahren zum Herstellen von Zinn(II)-Sulfat.**

(57) Die Erfindung betrifft ein Verfahren zum Herstellen von Zinn(II)-Sulfat, wobei Zinn zu einer schwefelsauren Kupfersulfatlösung gegeben wird. Um eine möglichst hohe Umsetzungsrate von Zinn mit Kupfersulfat zu erreichen, wird vorgeschlagen, daß Zinnstaub verwendet wird.

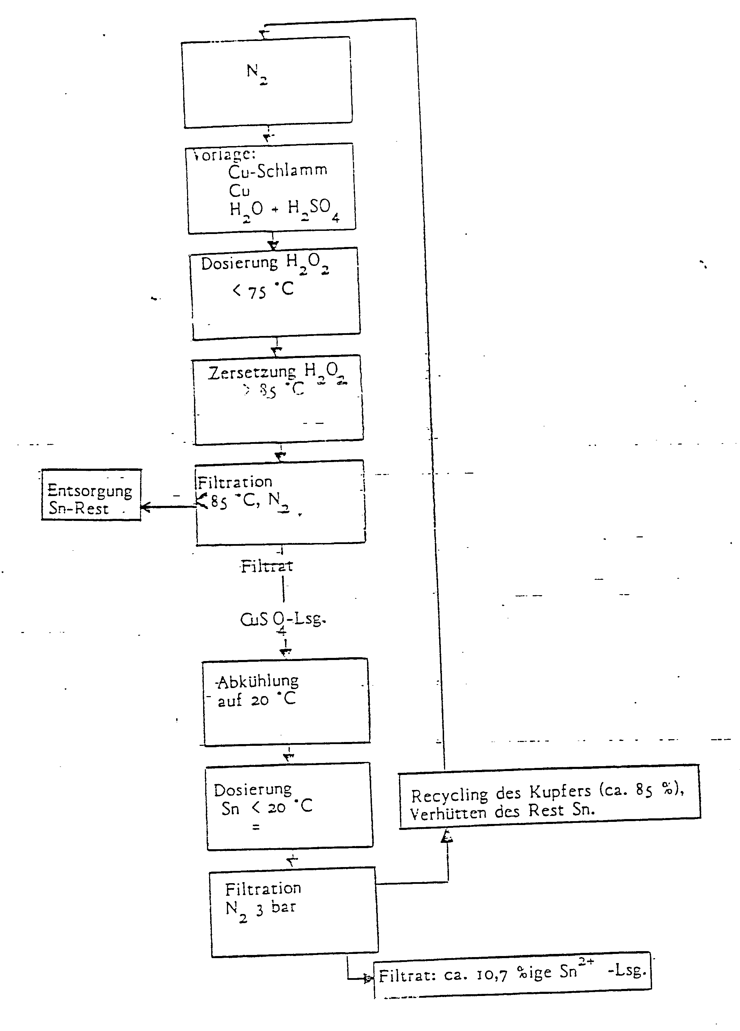

Zur Veröffentlichung ist die einzige Figur vorgesehen.

EP 0 351 550 A1

# Verfahren zum Herstellen von Zinn(II)-Sulfat

Die Erfindung betrifft ein Verfahren zum Herstellen von Zinn(II)-Sulfat, wobei Zinn zu einer schwefelsauren Kupfersulfatlösung gegeben wird.

Ein solches Verfahren ist bekannt (J.D. Donaldson und W. Moser in J. Chem. Soc. London 1960, 4000): Nach der Zugabe von metallischem Zinn wird die Lösung gekocht, wobei sich Kupfer abscheidet. Am Ende der Reaktion wird die Lösung farblos. Dabei färbt der Niederschlag sich grau, weil sich Zinn auf der Oberfläche des Kupfers wieder abscheidet. Zu diesem Zeitpunkt wird die Lösung schnell gefiltert und konzentriert. Das auf dem Kupferniederschlag wieder abgeschiedene Zinn erniedrigt die Umsetzungsrate zwischen Kupfer und Zinn.

Der Erfindung liegt die Aufgabe zugrunde, ein Verfahren der eingangs genannten Art zu schaffen, dessen Verluste an Zinn wesentlich geringer sind.

Diese Aufgabe wird dadurch gelöst, daß Zinnstaub verwendet wird. Der Erfindung liegt die folgende Überlegung zugrunde: Der Zinnverlust ist auf das Kochen der Kupfersulfat-Zinn-Lösung zurückzuführen. Ein aus einer höheren Umsetzungsrate zwischen Kupfer und Zinn resultierende Verminderung des Zinnverlustes kann daher erreicht werden, wenn die Reaktion bei einer tieferen Temperatur verläuft. Um eine praktisch brauchbare Reaktionsgeschwindigkeit für die Umsetzung zwischen Kupfersulfat und Zinn zu ereichen, wird daher in dieser Erfindung die Oberfläche des Zinn erhöht, indem sehr fein verteilter Zinnstaub verwendet wird. Dadurch findet die Reaktion mit in der Praxis brauchbarer Reaktionsgeschwindigkeit schon bei Raumtemperatur statt. Da die Lösung jetzt nicht mehr gekocht werden muß, scheidet sich das schon umgesetzte Zinn nicht wieder auf dem Kupferniederschlag ab. Es wurde festgestellt, daß in dem erfindungsgemäßen Verfahren eine fast 1:1-Umsetzung zwischen Kupfer und Zinn erreichbar ist.

Um bei einer wiederholten Herstellung einer Zinnsulfatlösung oder von Zinnsulfat in anderer Form möglichst wenig Kupfer zu verbrauchen, wird vorgeschlagen, daß die zum Herstellen weiteren Zinnsulfats benötigte Kupfersulfatlösung durch Oxidieren des von der früheren Zinnsulfatlösung abgetrennten Niederschlags, Umsetzen des Niederschlags mit Schwefelsäure und Abtrennen des so erhaltenen Kupfersulfats vom Rest des Niederschlags hergestellt wird. Der Hauptanteil des Kupfers wird so wiederverwendet. Eine entsprechende Menge an Kupfer wird daher eingespart. Auch die Entsorgungsprobleme verringern sich dadurch.

Um beim Wiederverwenden des Kupfers zu vermeiden, daß ein Teil des zuzugebenden Zinns von dem Rest des für die vorherige Oxidation des Kupfers vorgesehenen Oxidationsmittels oxidiert wird und so für die Reaktion zwischen Kupfersulfat und Zinn verloren geht, wird vorgeschlagen, daß der von der früheren Zinnsulfatlösung abgetrennte Niederschlag mit Wasserstoffperoxid oxidiert wird, deren nichtumgesetzter Anteil danach durch Erwärmen zersetzt wird.

Um die Oxidation des Zinns durch den Luftsauerstoff oder den im Wasser enthaltenen Sauerstoff zu unterdrücken, wird vorgeschlagen, daß das Verfahren unter sauerstofffreiem Schutzgas durchgeführt wird.

Um eine von Chlor- und von Kupferionen freie Zinnsulfatlösung zu erhalten, wird vorgeschlagen, daß in dem Verfahren höchstreines Elektrolytkupfer zum Herstellen der Kupfersulfatlösung verwendet wird. Für die Reinheit der Zinnsulfatlösung ist es ebenso auch vorteilhaft, wenn möglichst reines Zinnpulver verwendet wird.

Um eine kupfersulfatfreie Zinnsulfatlösung zu erhalten, ist eine vollständige Umsetzung von Kupfer notwendig. Daher wird vorgeschlagen, daß ein geringfügiger Überschuß an Zinn zugegeben wird.

Im folgenden wird ein Ausführungsbeispiel der Erfindung anhand des in der Zeichnung enthaltenen Flußdiagrammes beschrieben.

Das Ziel ist die Herstellung einer etwa 10,7 gew.-%igen Zinn(II)Sulfat-Lösung. Sämtliche Reaktionsvorgänge werden unter Stickstoff-Schutzgas durchgeführt. Zur Herstellung der Kupfersulfatlösung werden in dem mit Stickstoff gespülten Reaktionsbehälter nacheinander unter Rühren vollentionisiertes Wasser, Schwefelsäure und Kupferpulver vorgelegt. Daran schließt sich die Zugabe des Wasserstoffperoxids an. Die Dosierung wird so durchgeführt, daß die Sumpftemperatur nicht über 70-75°C, der Zersetzungstemperatur des Wasserstoffperoxids, steigt. Nach vollständiger Oxidation des Kupfers wird die Kupfersulfatlösung auf eine Temperatur von mehr als 85°C erhitzt, so daß noch vorhandenes Wasserstoffperoxid thermisch zersetzt wird. Diese Kupfersulfatlösung wird anschließend unter Stickstoffgas auf etwa 20°C gekühlt.

Zur Herstellung der Zinnsulfatlösung wird zu der auf 20°C abgekühlten Kupfersulfatlösung innerhalb von 30-40 Minuten unter Beibehaltung der Sumpftemperatur von 20°C das Zinnpulver kontinuierlich zudosiert. Diese Zugabe muß wiederum unter Schutzgas (Stickstoffgas) durchgeführt werden.

Die Umsetzung des Zinns erfolgt spontan. Nach erfolgter Reaktion wird das Reaktionsgemisch filtriert, das aus Zinnsulfat, Kupfer und nicht umgesetztem Zinn besteht, unter dem sich auch vierwertiges Zinn befindet. Dabei wird das Filtrat zunächst in einen Kreislauf geführt, so daß sich eine Anschwemmschicht aus Kupferniederschlag bilden kann. Es wird solange filtriert, bis daß das Filtrat klar und farblos geworden ist. Anschließend wird der Filterkuchen mit Stickstoff bei 3 bar getrocknet und ausgetragen. Dieser Filterkuchen wird bei einer erneuten Herstellung von Zinn(II)-Sulfat-Lösung zusammen mit reinem Kupfer verwendet.

Das Führen des Verfahrens unter Stickstoffschutzgas und das Verwenden von Wasserstoffperoxid zum Oxidieren des Kupfers, wobei nach dem Oxidieren das Wasserstoffperoxid durch Erwärmen zersetzt wird, ermöglicht eine Umsetzung zwischen Zinn und Kupfersulfat in praktisch sauerstofffreier Umgebung. Dadurch wird eine Zinnoxidation bei der Zugabe des feinen Zinnstaubs vermieden und praktisch sämtliches zugegebenes Zinnmetall mit Kupfersulfat umgesetzt. Zusammen mit der Rückführung des Kupferschlamms ist auf diese Weise eine besonders hohe Wirtschaftlichkeit bei der Herstellung der Zinn(II)-Sulfatlösung erreichbar.

Das Ausführungsbeispiel ist in der Zeichnung zusammengefaßt dargestellt.

**Ansprüche**

1. Verfahren zum Herstellen von Zinn(II)-Sulfat, wobei Zinn zu einer schwefelsauren Kupfersulfatlösung gegeben wird, dadurch gekennzeichnet, daß Zinnstaub verwendet wird.

2. Verfahren nach Anspruch 1, dadurch gekennzeichnet, daß die zum Herstellen weiterer Zinnsulfats benötigte Kupfersulfatlösung durch Oxidieren des von der früheren Zinnsulfatlösung abgetrennten Niederschlags, Umsetzen des Niederschlags mit Schwefelsäure und Abtrennen des so erhaltenen Kupfersulfats vom Rest des Niederschlags hergestellt wird.

3. Verfahren nach Anspruch 2, dadurch gekennzeichnet, daß der von der früheren Zinnsulfatlösung abgetrennte Niederschlag mit Wasserstoffperoxid oxidiert wird, deren nichtumgesetzter Anteil danach durch Erwärmen zersetzt wird.

4. Verfahren nach einem der Ansprüche 1 bis 3, dadurch gekennzeichnet, daß es unter sauerstofffreiem Schutzgas durchgeführt wird.

5. Verfahren nach einem der Ansprüche 1 bis 4, dadurch gekennzeichnet, daß höchstreines Elektrolytkupfer zum Herstellen der Kupfersulfatlösung verwendet wird.

6. Verfahren nach einem der Ansprüche 1 bis 5, dadurch gekennzeichnet, daß ein geringfügiger Überschuß an Zinn zugegeben wird.

Geänderte Patentansprüche gemäss Regel 86(2) EPÜ.

1. Verfahren zur Herstellung einer Zinn-(II)-Sulfat-Lösung durch Umsetzung von elementarem Zinn mit einer schwefelsauren Kupfersulfatlösung unter Kupferabscheidung, dadurch gekennzeichnet, daß Zinn in Form von Zinnstaub in fast äquimolaren Mengenverhältnissen zu einer gekühlten Kupfersulfatlösung bei Temperaturen bei oder unterhalb von 20° C gegeben wird.

2. Verfahren nach Anspruch 1, dadurch gekennzeichnet, daß die schwefelsaure Kupfersulfatlösung in einem kontinuierlichen Recyclingverfahren aus dem im Verfahren anfallenden Kupfer und einem zersetzbaren Oxidationsmittel in Gegenwart von Schwefelsäure hergestellt wird.

3. Verfahren nach Anspruch 1 und 2, dadurch gekennzeichnet, daß zur Oxidation des Kupfers Wasserstoffperoxid eingesetzt und dessen nicht umgesetzter Anteil durch Erwärmen zersetzt wird.

4. Verfahren nach Anspruch 1 bis 3, dadurch gekennzeichnet, daß die im Kreislauf geführte Kupfersulfatlösung von ggf. vorhandenen schwerlöslichen Zinnresten durch Filtration gereinigt wird, bevor sie gekühlt erneut mit Zinn umgesetzt wird.

5. Verfahren nach Anspruch 1 bis 4, dadurch gekennzeichnet, daß es unter sauerstofffreiem Schutzgas durchgeführt wird.

6. Verfahren nach Anspruch 1 bis 5, dadurch gekennzeichnet, daß höchstreines Elektrolytkupfer zum Herstellen der Kupfersulfatlösung eingesetzt wird.

D 8247 EP

```
                          ┌─────────────────────┐
                          │                     │
                ┌─────────────────────┐         │
                │                     │         │
                │         N           │         │
                │          2          │         │
                │                     │         │
                └─────────────────────┘         │
                          │                     │
                          ▼                     │
                ┌─────────────────────┐         │
                │ Vorlage:            │         │
                │   Cu-Schlamm        │         │
                │   Cu                │         │
                │   H O + H SO        │         │
                │     2     2  4      │         │
                └─────────────────────┘         │
                          │                     │
                          ▼                     │
                ┌─────────────────────┐         │
                │ Dosierung H O       │         │
                │            2 2      │         │
                │     < 75 °C         │         │
                │                     │         │
                └─────────────────────┘         │
                          │                     │
                          ▼                     │
                ┌─────────────────────┐         │
                │ Zersetzung H O      │         │
                │             2 2     │         │
                │    > 85 °C          │         │
                │                     │         │
                └─────────────────────┘         │
                          │                     │
                          ▼                     │
┌───────────────┐  ┌─────────────────────┐     │
│ Entsorgung    │◄─│ Filtration          │     │
│ Sn-Rest       │  │ < 85 °C, N          │     │
└───────────────┘  │            2        │     │
                   └─────────────────────┘     │
                          │                     │
                       Filtrat                  │
                          │                     │
                      CuSO -Lsg.                │
                          4                     │
                          ▼                     │
                ┌─────────────────────┐         │
                │ Abkühlung           │         │
                │ auf 20 °C           │         │
                │                     │         │
                └─────────────────────┘         │
                          │                     │
                          ▼                     │
                ┌─────────────────────┐  ┌──────────────────────────────┐
                │ Dosierung           │  │ Recycling des Kupfers (ca. 85 %),│
                │ Sn < 20 °C          │  │ Verhütten des Rest Sn.        │
                │   =                 │  └──────────────────────────────┘
                └─────────────────────┘         ▲
                          │                     │
                          ▼                     │
                ┌─────────────────────┐         │
                │ Filtration          │─────────┘
                │ N  3 bar            │
                │  2                  │
                └─────────────────────┘
                          │
                          └──► Filtrat: ca. 10,7 %ige Sn    -Lsg.
                                                       2+
```

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 211 724 (RHONE-POULENC SPECIALITES CHIMIQUES) * Seite 9, Ansprüche 1,7; Seite 10, Ansprüche 10,11 * | 1,6 | C 01 G 19/00 |
| Y | CHEMICAL ABSTRACTS, Band 70, Nr. 10, 10. März 1969, Seite 119, Zusammenfassung Nr. 39333f, Columbus, Ohio, US; P. PAPAGEORGIOS et al.: "Stannous sulfate for electroplating", & RUDY METALE NIEZELAZ. 1968, 13(10), 502-4 * Zusammenfassung * | 1 | |
| A | CHEMICAL ABSTRACTS, Band 74, Nr. 18, 3. Mai 1971, Seite 75, Zusammenfassung Nr. 89259q, Columbus, Ohio, US; & SU-A-281 440 (INSTITUTE OF CHEMICAL SCIENCES, ACADEMY OF SCIENCES, KAZAKH S.S.R.) 14-09-1970 * Zusammenfassung * | 1 | |
| A | CHEMICAL ABSTRACTS, Band 67, Nr. 26, 25. Dezember 1967, Seite 11272, Zusammenfassung Nr. 119361s, Columbus, Ohio, US; P. PAPAGEORGIOS et al.: "New methods of obtaining high-purity tin compounds and metallic tin", & CHEM. STOSOW., SER. A 11(2), 113-24(1967) | | **RECHERCHIERTE SACHGEBIETE (Int. Cl.4)** C 01 G |
| A | CHEMICAL ABSTRACTS, Band 81, Nr. 18, 4. November 1974, Seite 147, Zusammenfassung Nr. 108009w, Columbus, Ohio, US; & SU-A-414 194 (VOIKOV CHEMICAL PLANT, MOSCOW) 05-02-1974 | | |

Der vorliegende Recherchenbericht wurde für alle Patentansprüche erstellt

| Recherchenort | Abschlußdatum der Recherche | Prüfer |
|---|---|---|
| DEN HAAG | 20-09-1989 | LIBBERECHT-VERBEECK E.M. |